Europäisches Patentamt

European Patent Office

Office européen des brevets

(11) Veröffentlichungsnummer: **0 222 286**
**B1**

(12) # EUROPÄISCHE PATENTSCHRIFT

(45) Veröffentlichungstag der Patentschrift:
31.01.90

(21) Anmeldenummer: 86115181.9

(22) Anmeldetag: 03.11.86

(51) Int. Cl.⁴: **G 01 G 21/23**, G 01 G 1/24, G 01 G 21/28, G 01 G 21/08

(54) **Elektromechanische Waage.**

(30) Priorität: **13.11.85 DE 3540137**

(43) Veröffentlichungstag der Anmeldung:
**20.05.87 Patentblatt 87/21**

(45) Bekanntmachung des Hinweises auf die Patenterteilung:
**31.01.90 Patentblatt 90/5**

(84) Benannte Vertragsstaaten:
**AT CH DE ES FR GB LI**

(56) Entgegenhaltungen:
**WO-A-81/02341**
**GB-A- 2 087 085**
**US-A- 4 601 356**

(73) Patentinhaber: **Bizerba-Werke Wilhelm Kraut GmbH & Co. KG., Wilhelm-Kraut-Strasse 41, D-7460 Balingen 1 (DE)**

(72) Erfinder: **Kraft, Horst, Dipl.-Ing. (FH), Richard-Wagner-Strasse 1, D-7460 Balingen-Frommern (DE)**

(74) Vertreter: **Hoeger, Stellrecht & Partner, Uhlandstrasse 14 c, D-7000 Stuttgart 1 (DE)**

ACTORUM AG

## Beschreibung

Die Erfindung betrifft eine elektromechanische Waage mit einem ortsfesten Hauptrahmen, mit wenigstens einem daran gelenkig gelagerten Hebel mit Last- und Kraftarm, mit einer mit dem Lastarm des Hebels gelenkig verbundenen Wägebrücke zur Aufnahme einer zu wägenden Last und mit einem am Hauptrahmen angeordneten, vom Kraftarm des Hebels beaufschalgten Kraftaufnehmer, der die vom Hebel übermittelte, lastabhängige Kraft in eine entsprechende elektrische Meßgröße verwandelt.

Wenn bei bekannten Waagen dieser (z.B. Kochsieh, Handbuch des Wägens, 1985, S. 132 und 261) Art unterschiedliche Wägebereiche, beispielsweise von 0 bis 100 kg erzielt werden sollen, ist es erforderlich, jeweils besondere Kraftaufnehmer mit geeigneten Nennlastbereichen zu verwenden oder vorhandene Hebel gegen neue Hebel mit geeigneten Übersetzungsverhältnissen auszutauschen. Bei diesen Lösungen muß jedoch ein komplettes Sortiment in Gestalt einer Vielzahl von Kraftaufnehmern mit unterschiedlichen Nennlastbereichen und/oder einer Vielzahl von Hebeln mit unterschiedlichen Hebellängen bereitgehalten werden, was einen beträchtlichen Aufwand bezüglich Lagerhaltung, Montage, Justierung, Kundendienst usw. bedeutet.

Es ist Aufgabe der Erfindung, bei einer gattungsgemäßen Waage, ohne deren Baugröße zu verändern, den Wägebereich unter Zuhilfenahme eines einzigen Satzes vorgefertigter Hebel und Kraftaufnehmer zu variieren.

Die Aufgabe wird bei einer gattungsgemäßen Waage erfindungsgemäß dadurch gelöst, daß zur Veränderung des Übersetzungsverhältnisses zwischen Last- und Kraftarm am Hauptrahmen entlang der Längserstreckung des Kraftarmes des Hebels mehrere erste Bohrungen zur wahlweisen Befestigung des Kraftaufnehmers vorgesehen sind, und der Kraftarm des Hebels selbst entlang seiner Längserstreckung ebenfalls mehrere, den ersten Bohrungen zugeordnete, zweite Bohrungen aufweist, in denen ein den Kraftaufnehmer in dessen jeweiliger durch die ersten Bohrungen bestimmten Position beaufschlagendes Anlenkteil befestigbar ist.

Der Hauptvorteil dieser Lösung besteht darin, daß im Bedarfsfall ohne Zuhilfenahme weiterer Bauteile der Wägebereich einer sonst nicht veränderten Waage lediglich durch Versetzen des Kraftaufnehmers und des zugeordneten Anlenkteils verändert werden kann. Dies ist ohne großen Aufwand sogar am Aufstellungsort der Waage, also direkt beim Anwender möglich.

Die nachstehende Beschreibung bevorzugter Ausführungsformen der Erfindung dient im Zusammenhang mit beiliegender Zeichnung der weiteren Erläuterung.

Es zeigen:

Fig. 1 eine teilweise entlang der Linie 1-1 in Fig. 2 geschnittene Seitenansicht einer elektromechanischen Waage;

Fig. 2 eine teilweise weggebrochene Draufsicht der Waage aus Fig. 1 mit abgenommener Wägebrücke und

Fig. 3 eine Deaufsicht ähnlich Fig. 2 einer abgewandelten Ausführungsform.

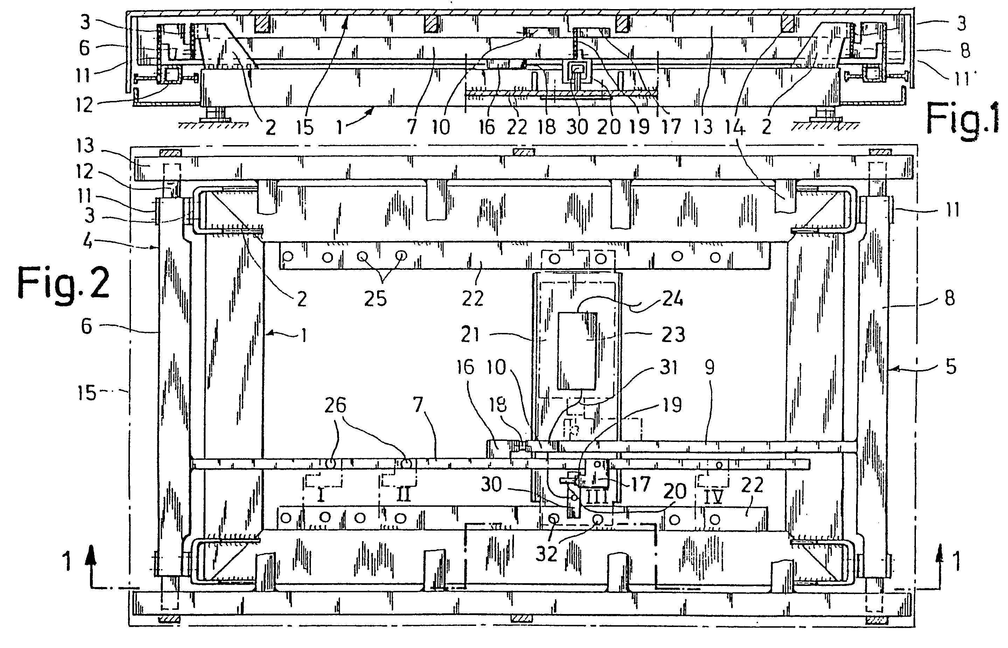

Die in Fig. 1 und 2 dargestellte elektromechanische Waage umfaßt einen auf einer Unterlage in bekannter Weise ortsfest abgestützten, rechteckigen Hauptrahmen 1 aus Vierkant-Metallprofilen. An jeder Ecke trägt der Hauptrahmen 1 eine nach oben und seitlich überstehende Aufnahme 2 für an sich bekannte, vertikal verlaufende, bandförmige Koppelelemente 3. Mit den nach unten hängenden, freiem Enden dieser Kopplungselemente 3 ist auf der in Fig. 1 und 2 links gelegenen Seite des Hauptrahmens 1 ein Hebel 4 gelenkig verbunden, der aus einer zwei einander gegenüberliegende Aufnahmen 2 überbrückenden, einen Lastarm bildenden Traverse 6 und einem von dieser rechtwinklig und starr abstehenden Kraftarm 7 gebildet ist. Auf der Seite des Hauptrahmens 1, welche der Traverse 6 gegenüberliegt, ist mittels zweier flexibler Koppelelemente 3 ein Gegenhebel 5 gelagert, der aus einer wiederum einen Lastarm bildenden Traverse 8 und einem von dieser starr und rechtwinklig zur Waagenmitte hin abstehenden Kraftarm 9 gebildet ist. Wie dargestellt, verlaufen die Kraftarme 7 und 9 auf einem Teil ihrer Längsausdehnung parallel nebeneinander. Die erwähnten Koppelelemente 3 vermitteln jeweils den «Drehpunkt» der Hebel 4 und 5.

Auf der den Koppelelementen 3 gegenüberliegenden Seite der Traversen 6, 8 ist mittels vier Koppelelementen 11, die den Koppelelementen 3 entsprechen, ein Brückenrahmen aufgehängt, der aus parallel zu den Traversen 6, 8 verlaufen Gliedern 12, mit diesen Gliedern starr verbundenen und senkrecht gerichteten Teilen 13 sowie aus die letztgenannten Teile miteinander verbindenden Querstreben 14 besteht. Auf den Brückenrahmen ist eine übliche Wägebrücke 15 aufgesetzt und fixiert. Eine auf die Wägebrücke 15 aufgesetzte (nicht dargestellte) Last bewirkt an den von den Traversen 6 und 8 zwischen den Koppelelementen 3 und 11 gelegenen Lastarmen des Hebels 4 bzw. des Gegenhebels 5 eine nach unten gerichtete Zugkraft, unter deren Wirkung die Kraftarme 7, 9 der genannten Hebel eine nach oben gerichtete Kraft erfahren.

An der Unterseite des Kraftarms 9 ist ein zum Kraftarm 8 hin gekröpftes oder vorspringendes Verbindungsteil 16 befestigt, welches über ein weiteres, flexibles, bandförmiges Koppelelement 18 mit dem freien Ende des Kraftarms 9 verbunden ist, und zwar mit Hilfe eines dort vorgesehenen Verbindungsteils 10. Die durch das Koppelelement 18 vermittelte Ankopplung der beiden Kraftarme 7, 9 liegt genau in der Mitte der von den Hebeln 4, 5 gebildeten Anordnung, d.h. die zwischen den Traversen 6, 8 und dem Koppelelement 18 gelegenen Teile der Kraftarme 7, 9 sind gleichlang.

Mit der Oberseite des Kraftarms 7 ist bei der in Fig. 1 und 2 dargestellten Ausführungsform ein Anlenkteil 17 verbunden, welches seitlich vorsteht und an einem abgewinkelten Schenkel mittels Koppelelements 19 ein rahmenförmiges Gehänge 20 trägt. Dieses Gehänge 20 umschließt einen einseitig freitragend mit dem Hauptrahmen 1 verbundenen Kraftaufnehmer 30 in Gestalt eines üblichen Biegestabes mit Dehnmeßstreifen. Wenn der Kraftarm 7 unter der Wirkung einer auf die Wägebrücke 15 aufgelegten Last eine nach oben gerichtete Kraft erfährt, überträgt sich diese Kraft über das Gehänge 20 von unten her auf den Biegestab und erteilt diesem eine lastproportionale Formänderung. Die Formänderung wird über den Dehnmeßstreifen in bekannter Weise in eine lastabhängige Meßgröße verwandelt. Die Meßgröße gelangt über ein mit dem Dehnungsmeßstreifen verbundenes Kabel 31 in einem Anschlußkasten 23 und von da über ein weiteres Kabel 24 zu einer (nicht dargestellten) an sich bekannten Auswerte- und Anzeigeeinheit.

Der den Kraftaufnehmer 30 bildende Biegestab ist auf einer Quertraverse 21 fest montiert. Die Quertraverse 21 liegt an zwei Leisten 22 auf, die an den Längsseiten des Hauptrahmens 1 fest mit diesem verbunden sind. Zu ihrer Befestigung mit den Leisten 22 weist die Quertraverse 21 an ihren beiden Enden jeweils ein Paar von Bohrungen 32 auf, die mit Paaren von Bohrungen 25 an den Leisten 22 ausgerichtet werden können. In die Bohrungen eingesetzte Schrauben vermitteln eine feste Verbindung zwischen Quertraverse 21 und Leisten 22. Wie dargestellt, sind an den Leisten 22 jeweils mehrere Paare von Bohrungen 25 entlang von Linien vorgesehen, die zur Längserstreckung des Kraftarms 9 parallel verlaufen. Auf diese Weise kann die Quertraverse 21 und mit ihr der Kraftaufnehmer 30 in verschiedenen Positionen relativ zum Kraftarm 7 am Hauptrahmen 1 festgestellt werden.

Der Kraftarm 7 ist seinerseits entlang seiner Längserstreckung mit mehreren Bohrungen 26 versehen, an denen das oben erwähnte, den Kraftaufnehmer 30 beaufschlagende Anlenkteil 17 so befestigt werden kann, daß es mit dem in entsprechender Position eingestellten Kraftaufnehmer 30 über das Gehänge 20 in Wirkverbindung treten kann. In Fig. 2 sind verschiedene, mögliche Positionen des Kraftaufnehmers 30 und des Anlenkteil 17 strichpunktiert eingetragen und mit I, II, III und IV bezeichnet. Auf diese Weise kann das Übersetzungsverhältnis zwischen dem von der Traverse 6 gebildeten Lastarm und dem Kraftarm 7 verändert und der Wägebereich der Waage dementsprechend ausgewählt werden. Bei hoher Nennlast wird man den Kraftaufnehmer 30 und das Anlenkteil 17 bespielsweise in der Position IV, bei kleiner Nennlast in Position I anordnen. In jedem Falle brauchen der Kraftaufnehmer 30 und die Hebel 4, 5 nicht ausgetauscht zu werden. Es genügt, jeweils die Lage des Kraftaufnehmer 30 und des Anlenkteils 17 zu verändern.

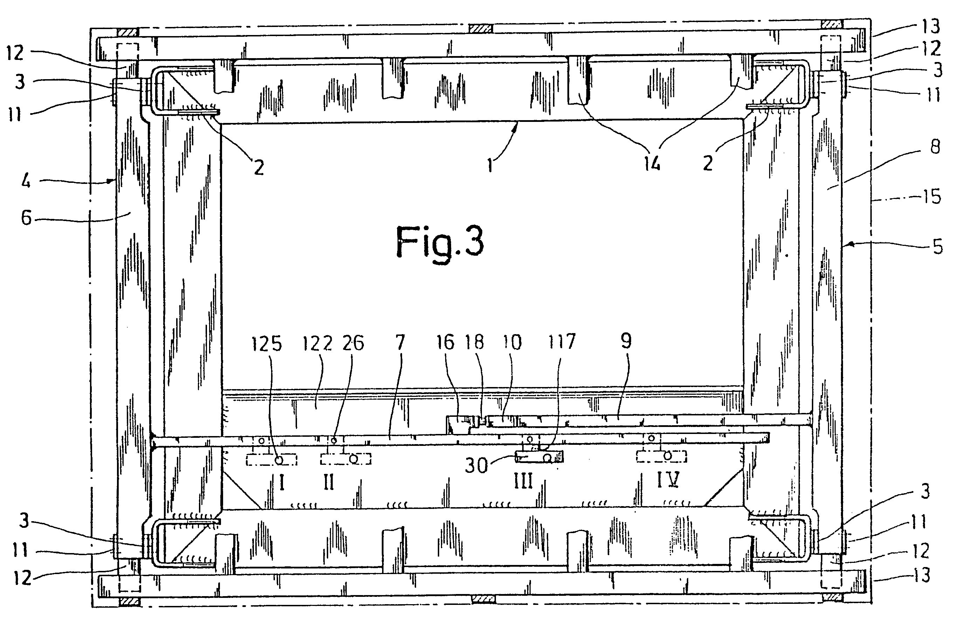

Die in Fig. 3 dargestellte Ausführungsform unterscheidet sich von derjenigen nach Fig. 1 und 2 lediglich dadurch, daß die Quertraverse 21 und die Leisten 22 entfallen. Stattdessen ist mit dem Hauptrahmen 1 fest ein Steg 122, z.B. in Gestalt eines angeschweißten Bleches verbunden, der entlang der Längserstreckung des Kraftarms 7 mehrere gleichartige Bohrungen 125 zur wahlweisen Befestigung des Kraftaufnehmers 30 aufweist. Bei der Ausführungsform gemäss Fig. 3 ist der wiederum als Biegestab ausgebildete Kraftaufnehmer 30 gegenüber der Ausführungsform gemäß Fig. 1 und 2 um 90° verdreht, erstreckt sich also parallel zum Kraftarm 7. Mit Hilfe der verschiedenen Bohrungen 125 kann der Kraftaufnehmer 30 wiederum in mehreren Positionen I, II, III oder IV angeordnet werden. Zur Beaufschlagung des den Kraftaufnehmer 30 bildenden Biegestabes steht von der Unterseite des Kraftarms 7 ein Anlenkteil 117 seitlich ab, welches den Biegestab an seinem frei tragenden Ende untergreift und dort bei entsprechender Belastung der Waage eine nach oben gerichtete Formveränderung auslöst. Das Anlenkteil 117 ist mit Hilfe von Schrauben in Bohrungen 26 wahlweise befestigbar, die den Bohrungen 26 der Ausführungsform gemäß Fig. 1 und 2 entsprechen.

Bei den dargestellten und beschriebenen Ausführungsformen wirkt die eine zu wägende Last tragende Wägebrücke 15 auf zwei Hebel, nämlich den Hebel 4 und den Gegenhebel 5 ein. Bei anderen Ausführungsformen der Erfindung kann es grundsätzlich ausreichend sein, nur einen einzigen Hebel, welcher die Kraft auf den Kraftaufnehmer 30 überträgt, vorzusehen. Auf der anderen Seite kann die Wägebrücke 15 auch mit Hebelwerken aus mehr als zwei Hebeln zusammenwirken. An der grundsätzlichen Veränderbarkeit des Wägebereichs durch entsprechendes Verstellen des Kraftaufnehmers 30 und des Anlenkteils 17 bzw. 117 ändert sich hieran nichts.

Bei den Ausführungsformen gemäß Fig. 1 bis 3 sind die Koppelelemente 3, 11, 18 und 19 jeweils als vertikal verlaufende, flexible Bänder ausgebildet. Stattdessen können die Koppelelemente in an sich bekannter Weise auch als Schneiden und Pfannen, Gehänge oder andere im Waagenbau übliche Bauelemente ausgebildet sein.

Die Quertraverse 21 der Ausführungsform gemäß Fig. 1 und 2 könnte entsprechend ihren relativ großen Abmessungen alternativ auch einen größeren Kraftaufnehmer 30, als in Fig. 2 dargestellt, aufnehmen, dem ein entsprechend größerer Anschlußkasten 23 zugeordnet werden kann. Diese größeren Baueinheiten sind in Fig. 2 strichpunktiert angedeutet. Auch andere Kraftaufnehmer als Biegestäbe kommen für eine erfindungsgemäße Anwendung in Betracht.

## Patentansprüche

1. Elektromechanische Waage mit einem ortsfesten Hauptrahmen, mit wenigstens einem daran gelenkig gelagerten Hebel mit Last- und Kraftarm, mit einer mit dem Lastarm des Hebels gelenkig verbundenen Wägebrücke zur Aufnahme einer zu wägenden Last und mit einem am Hauptrahmen angeordneten, vom Kraftarm des Hebels beaufschlagten Kraftaufnehmer, der die vom Hebel übermittelte, lastabhängige Kraft in eine entsprechende elektrische Meßgröße verwandelt, dadurch gekennzeichnet, daß zur Veränderung des Übersetzungsverhältnisses zwischen Last- und Kraftarm (6 bzw. 7) am Hauptrahmen (1) entlang der Längserstreckung des Kraftarmes (7) des Hebels (4) mehrere erste Bohrungen (25, 125) zur wahlweisen Befestigung des Kraftaufnehmers (30) vorgesehen sind, und der Kraftarm (7) des Hebels (4) selbst entlang seiner Längserstreckung ebenfalls mehrere, den ersten Bohrungen zugeordnete, zweite Bohrungen (26) aufweist, in denen ein den Kraftaufnehmer (30) in dessen jeweiliger durch die ersten Bohrungen (25, 125) bestimmten Position beaufschlagendes Anlenkteil (17, 117) befestigbar ist.

2. Waage nach Anspruch 1, dadurch gekennzeichnet, daß die ersten Bohrungen (25) paarweise an zwei einander gegenüberliegenden und mit dem Hauptrahmen (1) fest verbundenen Leisten (22) vorgesehen sind, und in den Bohrungen (25) eine die Leisten (22) überbrückende, den Kraftaufnehmer (30) tragende Quertraverse (21) befestigbar ist.

3. Waage nach Anspruch 1, dadurch gekennzeichnet, daß die ersten Bohrungen (125) an einem fest mit dem Hauptrahmen (1) verbundenen Steg (122) vorgesehen sind.

4. Waage nach Anspruch 1, dadurch gekennzeichnet, daß sich der Kraftarm (7) des Hebels (4) über die Mitte des Hauptrahmens (1) hinaus erstreckt.

5. Waage nach Anspruch 4, dadurch gekennzeichnet, daß dem Hebel (4) ein an der gegenüberliegenden Seite des Hauptrahmens (1) gelenkig gelagerter, ebenfalls mit der Wägebrücke (15) gelenkig verbundener Gegenhebel (5) zugeordnet ist, dessen Kraftarm (9) parallel zu und neben dem Kraftarm (7) des Hebels (4) verläuft, und daß die beiden Kraftarme (7, 9) in der Mitte zwischen den Lagerstellen (Koppelelemente 3) von Hebel- und Gegenhebel (4 bzw. 5) aneinander gekoppelt sind.

6. Waage nach Anspruch 5, dadurch gekennzeichnet, daß am Kraftarm (7) des Hebels (4) ein zum Kraftarm (9) des Gegenhebels (5) hin vorspringendes Verbindungsteil (16) befestigt ist, an dem ein mit dem Kraftarm (9) des Gegenhebels (5) verbundenes Koppelelement (18) angreift.

7. Waage nach Anspruch 6, dadurch gekennzeichnet, daß das Koppelelement (18) ein vertikal verlaufendes, flexibles Band ist.

8. Waage nach Anspruch 1, dadurch gekennzeichnet, daß der Kraftaufnehmer (30) ein Biegestab mit eingebauten Dehnmeßstreifen ist, und der Biegestab an seiner Unterseite durch den Kraftarm (7) des Hebels (4) mit einer nach oben gerichteten Druckkraft beaufschlagt ist.

## Claims

1. An electromechanical balance comprising a stationary main frame with at least one lever with a load arm and a power arm pivotably linked thereto, a weighing bridge for the reception of a load to be weighed, which bridge is pivotably connected to the load arm of the lever, and a force transducer which is disposed on the main frame and is acted upon by the power arm of the lever, and which converts the load-dependent force transmitted by the lever into a correspondingly large electrical signal, characterized in that in order to alter the transmission ratio between the load arm and the power (6 and 7 respectively) a plurality of first holes (25, 125) are provided in the main frame (1), along the longitudinal extent of the power arm (7) of the lever (4), for fastening the force transducer (30) in a chosen position, and the power arm (7) of the lever (4) itself likewise comprises a plurality of second holes (26) along its longitudinal extent, corresponding with the first holes, to which a linking member (17, 117), acting on the force transducer (30) the position of which is always determined by the first holes (25, 125), can be fastened.

2. A balance according to Claim 1, characterized in that the first holes (25) are provided in pairs in two rails (22) located opposite one another and permanently fixed to the main frame (1), and a transverse cross-piece (21) which bridges the rails (22) and carries the force transducer (30) can be fastened in the holes (25).

3. A balance according to Claim 1, characterized in that the first holes (125) are provided in a bridging piece (122) which is permanently fixed to the main frame (1).

4. A balance according to Claim 1, characterized in that the powder arm (7) of the lever (4) extends beyond the middle of the main frame (1).

5. A balance according to Claim 4, characterized in that an opposite lever (5) is pivotably linked on the opposite side of the main frame (1) to the lever (4) and is likewise flexibly connected to the weighing bridge (15), a power arm (9) of the said lever (5) extends parallel to and beside the power arm (7) of the lever (4), and in that the two power arms (7, 9) are coupled together in the middle between the bearings (coupling members 3) of the lever and the opposite lever (4 and 5 respectively).

6. A balance according to Claim 5, characterized in that connecting means (16) projecting towards the powder arm (9) of the opposite lever (5) is fastened on the power arm (7) of the lever (4), and a coupling element (18) connected to the power arm (9) of the opposite lever (5) engages said connecting means.

7. A balance according to Claim 6, characterized in that the coupling element (18) is a vertically extending flexible band.

8. A balance according to Claim 1, characterized in that the force transducer (30) is a deflection bar with built-in marks for measuring the extent of deflection, the deflection bar being acted upon, on its underside, with an upwardly directed force by the power arm (7) of the lever (4).

## Revendications

1. Balance électromécanique avec un bâti principale fixe, avec au moins un levier articulé sur ce dernier ayant un bras de charge et un bras de force, avec un plateau de pesage articulé avec le bras de charge du levier pour recevoir une charge à peser, et avec un détecteur de force disposé sur le bâti principal, assujetti au bras de force du levier, qui transforme la force dépendant de la charge transmise par le levier en une grandeur correspondante de mesure électrique, caractérisée en ce que, pour modifier le rapport de conversion entre le bras de charge et le bras de force (6, 7 respectivement), sont prévus sur le bâti principal (1) le long de la dimension longitudinale du bras de force (7) du levier (4) plusieurs premiers trous (25, 125) pour la fixation à volonté du détecteur de force (30), et le bras de force (7) du levier (4) lui-même présente le long de sa dimension longitudinale également plusieurs seconds trous (26) correspondant aux premiers trous, dans chacun desquels peut être fixé un élément d'articulation (17, 117) agissant sur le détecteur de forces (30) à chacune de ses positions déterminées par les premiers trous (25, 125).

2. Balance selon la revendication 1, caractérisée en ce que les premiers trous (25) sont prévus deux à deux sur deux barres (22) opposées l'une à l'autre et réunies rigidement au bâti principal (1), et en ce qu'une traverse (21) portant le détecteur de force (30) et franchissant l'intervalle entre les barres (22), peut être fixée à l'aide des trous (25).

3. Balance selon la revendication 1, caractérisée en ce que les premiers trous (125) sont prévus sur une nervure (122) reliée rigidement au bâti principal (1).

4. Balance selon la revendication 1, caractérisée en ce que le bras de force (7) du levier (4) s'étend au-delà du milieu du bâti principal (1).

5. Balance selon la revendication 4, caractérisée en ce qu'est disposé, en étant articulé sur le côté opposé du bâti principal (1), et articulé aussi avec le plateau de pesage (15), un contre-levier (5) dont le bras de force (9) s'étend parallèlement au bras de force (7) du levier (4) à proximité de ce dernier et en ce que les deux bras de force (7, 9) sont accouplés l'un avec l'autre au milieu entre les points d'articulation (éléments d'articulation 3) du levier et du contre-levier (4, 5 respectivement).

6. Balance selon la revendication 5, caractérisée en ce qu'une pièce de liaison (16) se projetant vers le bras de force (9) du contre-levier (5) est fixée au bras de force (7) du levier (4), et s'engage avec un élément d'accouplement (18) réuni au bras de force (9) du contre-levier (5).

7. Balance selon la revendication 6, caractérisée en ce que l'élément d'accouplement (18) est une bande flexible s'étendant verticalement.

8. Balance selon la revendication 1, caractérisée en ce que le détecteur de force (30) est une tige flexible avec une jauge de contrainte incorporée et la tige flexible est contrainte sur sa face inférieure par le bras de force (7) du levier (4) exerçant une force de pression dirigée vers le haut.

Fig.1

Fig.2

Fig.3

125  122  26    7    16 18 10   117      9

I    II          30    III      IV

EP 0 222 286 B1